(19) **Europäisches Patentamt / European Patent Office / Office européen des brevets**

(11) **EP 3 689 947 A1**

(12) **EUROPEAN PATENT APPLICATION**
published in accordance with Art. 153(4) EPC

(43) Date of publication:
**05.08.2020 Bulletin 2020/32**

(21) Application number: **18862817.6**

(22) Date of filing: **20.09.2018**

(51) Int Cl.:
**C08J 5/04** (2006.01)  **C08L 63/00** (2006.01)

(86) International application number:
**PCT/JP2018/034754**

(87) International publication number:
**WO 2019/065432 (04.04.2019 Gazette 2019/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.09.2017 JP 2017188113**

(71) Applicant: **Toray Industries, Inc.**
**Tokyo 103-8666 (JP)**

(72) Inventors:
• **HIRANO, Masanori**
  **Nagoya-shi**
  **Aichi 455-8502 (JP)**
• **TOMIOKA, Nobuyuki**
  **Nagoya-shi**
  **Aichi 455-8502 (JP)**

(74) Representative: **Mewburn Ellis LLP**
  **Aurora Building**
  **Counterslip**
  **Bristol BS1 6BX (GB)**

(54) **THERMOSETTING RESIN COMPOSITION FOR FIBER-REINFORCED COMPOSITE MATERIAL, PREFORM, FIBER-REINFORCED COMPOSITE MATERIAL, AND METHOD FOR PRODUCING FIBER-REINFORCED COMPOSITE MATERIAL**

(57) The purpose of the present invention is to provide: a thermosetting resin composition for a fiber-reinforced composite material, the thermosetting resin composition having an excellent balance of rapid curability and storage stability as well as excellent handleability at normal temperature and ability to impregnate a reinforcing fiber base material; and a preform for a fiber-reinforced composite material and a fiber-reinforced composite material that use the same. To achieve this purpose, the first embodiment of the thermosetting resin composition for a fiber-reinforced composite material according the present invention has the following constitution. Specifically, a thermosetting resin composition for a fiber-reinforced composite material having domains of each of [A] a base compound and [B] a curing agent and/or [C] a catalyst and having a specific gravity of 0.90-1.30 and a complex viscosity $\eta^*$ of $1 \times 10^7$ Pa·s or higher in dynamic viscoelasticity measurement at 25°C.

**EP 3 689 947 A1**

**Description**

TECHNICAL FIELD

The present invention relates to a thermosetting resin composition used for a fiber-reinforced composite material, a preform and a fiber-reinforced composite material produced from the preform, and a method for producing a fiber-reinforced composite material.

BACKGROUND ART

A fiber-reinforced composite material, which contains a reinforcing fiber and a matrix resin, can be designed using advantages of the reinforcing fiber and the matrix resin, so that the fiber-reinforced composite material has been more widely used in the fields of aerospace, sports, general industry, and the like.

As the reinforcing fiber, fibers such as glass fibers, aramid fibers, carbon fibers, and boron fibers are used. As the matrix resin, both thermosetting resins and thermoplastic resins are used. The thermosetting resins easily impregnated into the reinforcing fibers are more often used. As the thermosetting resin, resins such as epoxy resins, unsaturated polyester resins, vinyl ester resins, phenol resins, bismaleimide resins, and cyanate resins are used.

In general, for producing a fiber-reinforced composite material, methods such as a prepreg method, hand lay-up, filament winding, pultrusion, resin transfer molding (RTM), film bag molding, and press molding are employed. Particularly when productivity is required, the RTM method, film bag molding, and press molding that have good productivity are preferably employed.

In particular, the demand for fiber-reinforced composite materials such as carbon fiber-reinforced composite materials is recently increasing especially for uses in aircraft and cars. To employ the fiber-reinforced composite materials for these uses more generally, materials that have a low cost and low environmental load have been desired.

A matrix resin used in the above-mentioned conventional methods for producing a fiber-reinforced composite material is liquid or semisolid at normal temperature so that the matrix resin has a sufficient impregnating ability into a reinforcing fiber substrate. Such a resin tends to remain in a resin-blending device and a resin-injecting device during the use, and make a great loss. For example, when a prepreg method is employed, a process is performed in which a resin film is produced from a matrix resin and then the resin is impregnated into a reinforcing fiber. When the resin film is produced, a subsidiary material such as a releasable film is often needed, and the cost easily increases. Moreover, because the resin composition needs to be liquid or semisolid at normal temperature, it is difficult to mix a large amount of component that is solid at normal temperature.

In addition, when the liquid or semisolid thermosetting resin is a one-component resin composition in which a base resin, a curing agent, and a catalyst component are compatibilized in advance, it is difficult to balance the high-speed curability and the storage stability in the resin. In a molding method such as RTM, a two-component resin composition is sometimes used. In the two-component resin composition, resins having good high-speed curability are obtained by preparing a base resin component and a curing agent-catalyst component separately and mixing them immediately before use, however, the work and equipment in the manufacturing site are complex.

In Patent Document 1, a powdered epoxy resin composition is disclosed that is produced by pulverizing a crystalline epoxy resin that is solid at 30°C and a solid curing agent, pressure-bonding them, and then pulverizing the resulting product again.

In Patent Document 2, a resin composition is disclosed that contains a crystalline epoxy resin for use in a fiber-reinforced composite material, a crystalline curing agent, and a curing accelerator.

PRIOR ART DOCUMENTS

PATENT DOCUMENTS

Patent Document 1: Japanese Examined Patent Application Publication No. 3-29098
Patent Document 2: Japanese Patent No. 5315057

SUMMARY OF THE INVENTION

PROBLEMS TO BE SOLVED BY THE INVENTION

The material described in Patent Document 1 is a solid resin composition that hardly causes composition unevenness in the resin cured product. However, a balance between high-speed curability and storage stability is not described, and when a fiber-reinforced composite material is produced from the above-mentioned material, a surface pit and an internal void are caused, so that the strength property is much deteriorated.

The material described in Patent Document 2 is a resin composition in which a crystalline epoxy resin, a crystalline curing agent, and a catalyst are compatibilized. The resin composition is, however, not good in a balance between high-speed curability and storage stability of the resin.

An object of the present invention is to provide a thermosetting resin composition for a fiber-reinforced composite material that overcomes the defects of the conventional techniques and is good in a balance between high-speed curability and storage stability, the handling property at normal temperature, and the impregnating ability into a reinforcing fiber substrate, a preform for a fiber-reinforced composite material that is produced from the thermosetting resin composition, and a fiber-reinforced composite material.

SOLUTIONS TO THE PROBLEMS

The present invention for solving the above-mentioned problems is as follows.

(1) A thermosetting resin composition for a fiber-reinforced composite material, the thermosetting resin composition containing:

a domain of a base resin [A]; and
a domain of a curing agent [B] and/or a domain of a catalyst [C],
the thermosetting resin composition having a specific gravity of 0.90 to 1.30, and a complex viscosity $\eta^*$ determined by dynamic viscoelasticity measurement at 25°C of $1 \times 10^7$ Pa·s or more.

(2) A thermosetting resin composition for a fiber-reinforced composite material, the thermosetting resin composition containing:

a domain of a base resin [A]; and
a domain of a curing agent [B] and/or a domain of a catalyst [C],
the thermosetting resin composition having a porosity of 0.1 to 25%, and a complex viscosity $\eta^*$ determined by dynamic viscoelasticity measurement at 25°C of $1 \times 10^7$ Pa·s or more.

(3) A preform for a fiber-reinforced composite material, the preform containing:

the thermosetting resin composition for a fiber-reinforced composite material according to the above (1) or (2); and
a dry reinforcing fiber substrate.

(4) A fiber-reinforced composite material that is a molded body containing a reinforcing fiber substrate and the thermosetting resin composition for a fiber-reinforced composite material according to the above (1) or (2) impregnated into the reinforcing fiber substrate, wherein the thermosetting resin composition is present as a cured product in the molded body.
(5) A method for producing a fiber-reinforced composite material, the method including:

a molding step of melting the thermosetting resin composition for a fiber-reinforced composite material according to the above (1) or (2), and molding the thermosetting resin composition while impregnating the thermosetting resin composition into a dry reinforcing fiber substrate; and
a curing step of curing the thermosetting resin composition that is impregnated into the dry reinforcing fiber substrate and molded.

EFFECTS OF THE INVENTION

An object of the present invention is to provide a thermosetting resin composition for a fiber-reinforced composite material that is good in a balance between high-speed curability and storage stability, the handling property at normal temperature, and the impregnating ability into a reinforcing fiber substrate, a preform for a fiber-reinforced composite material that is produced from the thermosetting resin composition, and a fiber-reinforced composite material.

EMBODIMENTS OF THE INVENTION

Hereinafter, desirable embodiments of the present invention will be described.

The thermosetting resin composition for a fiber-reinforced composite material according to a first aspect of the present invention is a thermosetting resin composition containing: a domain of a base resin [A]; and a domain of a curing agent [B] and/or a domain of a catalyst [C], the thermosetting resin composition having a specific gravity of 0.90 to 1.30, and a complex viscosity $\eta^*$ determined by dynamic viscoelasticity measurement at 25°C of $1 \times 10^7$ Pa·s or more. In the present invention, a "thermosetting resin composition for a fiber-reinforced composite material" is sometimes simply referred to as a "thermosetting resin composition".

The thermosetting resin composition for a fiber-reinforced composite material according to a second aspect of the present invention is a thermosetting resin composition containing: a domain of a base resin [A]; and a domain of a curing agent [B] and/or a domain of a catalyst [C], the thermosetting resin composition having a porosity of 0.1 to 25%, and a complex viscosity $\eta^*$ determined by dynamic viscoelasticity measurement at 25°C of $1 \times 10^7$ Pa·s or more.

The thermosetting resin composition according to the present invention has a complex viscosity $\eta^*$ determined by dynamic viscoelasticity measurement at normal temperature of $1 \times 10^7$ Pa·s or more. The word "normal temperature" means a temperature of 25°C. When the thermosetting resin composition has the above-mentioned complex viscosity $\eta^*$, the thermosetting resin composition is solid at normal temperature. As a result, the thermosetting resin composition according to the present invention has a good handling property at normal temperature, and the cost of producing the fiber-reinforced composite material is easily reduced. The upper limit of the complex viscosity $\eta^*$ is not particularly limited, but generally about $1 \times 10^9$ Pa·s.

In dynamic viscoelasticity measurement, ARES-G2 (manufactured by TA Instruments) is used. The complex viscosity $\eta^*$ can be measured using the measuring device by setting a sample on a 8 mm parallel plate, applying a pulling cycle of 0.5 Hz, and measuring the complex viscosity $\eta^*$ in a temperature range of 0 to 300°C at a temperature rising rate of 1.5°C/min.

The thermosetting resin composition according to the present invention contains various types of generally used thermosetting resins that can be employed as long as the requirements of the present invention are satisfied. As the thermosetting resin, for example, epoxy resins, phenol resins, unsaturated polyester resins, vinyl ester resins, bismaleimide resins, cyanate resins, benzoxazine resins, urethane resins, and urea resins can be suitably employed.

The base resin [A] used in the thermosetting resin composition according to the present invention is a component in which a curing reaction progresses by heating to form a cross-linked structure. The base resin [A] is preferably a monomer component. As the base resin [A], thermosetting components such as compounds having an epoxy group, compounds having a phenol group, compounds having a vinyl group, compounds having a bismaleimide structure, compounds having an isocyanate group, oxazine compounds, compounds having a hydroxyl group, and compounds having an amino group can be used.

Among the above-mentioned thermosetting resins, the thermosetting resin composition according to the present invention preferably contains an epoxy resin from the viewpoint of the adhesion property with a reinforcing fiber and the handling property. When the thermosetting resin composition contains an epoxy resin as a thermosetting resin, the base resin [A] contains a compound having one or more, preferably two or more epoxy groups in one molecule. The epoxy resin may contain only one compound having an epoxy group, or may be a mixture of a plurality of compounds.

The curing agent [B] used in the present invention is a component that forms a covalent bond to cure the thermosetting resin when compatibilized with the base resin. When the thermosetting resin is an epoxy resin, compounds having an active group that can react with an epoxy group can be used as a curing agent. For example, acid anhydrides and phenol compounds can be used.

The catalyst [C] used in the present invention is a component that makes a single curing reaction of the base resin, and/or a curing reaction by forming a bond between the base resin and the curing agent proceed rapidly and smoothly. When the thermosetting resin is an epoxy resin, imidazole derivatives and organophosphorus compounds can be used as a catalyst.

The thermosetting resin composition according to the present invention is a thermosetting resin composition having a domain of the base resin [A], and a domain of the curing agent [B] and/or a domain of the catalyst [C]. In the present invention, the phrase "having a domain of each component" means that the components in the resin composition are not uniformly compatibilized at a molecular level, but dispersed in a state where each component has a domain diameter of micrometer order. In general, each domain is formed to be in contact with a different domain at an interface. The word "micrometer order" means the range of 0.1 $\mu$m to 10000 $\mu$m.

The thermosetting resin composition having a domain of each component can be produced by, for example, mixing the powder raw materials of the components, and pressure-bonding the mixture with a press or the like as described below. The production method is not limited to the above-mentioned method. For example, the thermosetting resin composition having a domain of each component can be produced by heating and melting the components to be compatibilized with each other, and then cooling the resulting product to precipitate and solidify each component domain by domain.

The distribution form of the domain of each component can be determined using various types of two-dimensional mapping methods. In particular, mapping analyses using active energy rays such as ultraviolet rays, visible rays, infrared rays, electron rays, and X-rays are effective, and mapping analyses that can identify chemical compositions are more preferable.

In particular, the domain diameter of each component is determined by performing chemical composition mapping through infrared spectroscopy, measuring 100 domain widths in the range in which the absorbance of each component is equal to or higher than the threshold value, and calculating the average of the domain widths as the domain diameter. When it is difficult to determine the components only through infrared spectroscopy, the components may be determined by a combination of infrared spectroscopy and elemental analysis. Moreover, the domain diameter may be determined by measuring 100 domain widths that are widths of each component observed with a microscope using a dye, and calculating the average of the domain widths as the domain diameter.

When the components of the thermosetting resin composition are not uniformly compatibilized at a molecular level and the thermosetting resin composition has a domain of each component, the base resin, and the curing agent and/or the catalyst are in contact with each other at a low rate, so that the thermosetting resin composition can have good storage stability. Moreover, when a thermosetting resin having good high-speed curability is employed, the thermosetting resin composition is good in a balance between high-speed curability and storage stability.

The domain diameter of each component in the thermosetting resin composition is preferably 0.5 to 500 $\mu$m, more preferably 1 to 300 $\mu$m, and still more preferably 10 to 200 $\mu$m. When the domain diameter of each component is 0.5 to 500 $\mu$m, sufficient storage stability is secured, and the cured product having little unevenness is easily obtained after the thermosetting resin is melted and cured.

In the thermosetting resin composition according to the present invention, a product of a curing time x (min) at 150°C and a curing reaction progress rate y (%) after one week storage under an environment at 40°C preferably satisfies (Formula 1), and more preferably satisfies (Formula 2) shown below.

$$0 \leq x \times y \leq 40 \quad \text{(Formula 1)}$$

$$0 \leq x \times y \leq 15 \quad \text{(Formula 2)}$$

In (Formula 1) and (Formula 2), x satisfies $0.1 \leq x \leq 300$, and y satisfies $0 \leq y \leq 50$.

The curing time x (min) at 150°C is obtained by measuring an ion viscosity using the dielectric measuring device described below, calculating a cure index from the ion viscosity, and determining the time when the cure index value exceeds 90%. The curing reaction progress rate y (%) is determined by measuring a calorific value due to the curing reaction of the resin composition immediately after the preparation and a calorific value after one week storage under an environment at 40°C using differential scanning calorimetry (DSC), and calculating the ratio between the calorific values using (Formula 5) described below.

$x \times y$ in (Formula 1) and (Formula 2) is an index that shows a balance between high-speed curability and storage stability of the thermosetting resin composition. In general, high-speed curability and storage stability of the thermosetting resin are in a trade-off relationship, however, the thermosetting resin composition according to the present invention can have a good balance between high-speed curability and storage stability as described above.

From the viewpoint of ensuring the above-mentioned high-speed curability and storage stability, the thermosetting resin composition according to the present invention preferably contains the catalyst [C], and preferably has a content of the catalyst [C] of 1 to 30% by mass, more preferably 1 to 20% by mass, and still more preferably 2 to 15% by mass based on 100% by mass of the thermosetting resin composition for a fiber-reinforced composite material. The thermosetting resin composition may have a content of the catalyst [C] in the range from any lower limit to any upper limit described above. When the thermosetting resin composition has a content of the catalyst [C] of 1 to 30% by mass, the thermosetting resin composition has good high-speed curability and easily maintains good storage stability.

In the thermosetting resin composition according to the present invention, the molar number ratio of active groups in the curing agent [B] to active groups in the base resin [A] is preferably 0.5 to 2.0, and more preferably 0.8 to 1.6. When the molar number ratio of active groups in the curing agent [B] to active groups in the base resin [A] is 0.5 to 2.0, the fiber-reinforced composite material easily has good mechanical characteristics and heat resistance.

In the thermosetting resin composition according to the first aspect of the present invention, the thermosetting resin composition has a specific gravity of 0.90 to 1.30, preferably 0.95 to 1.25, and more preferably 1.00 to 1.20. The thermosetting resin composition may have a specific gravity in the range from any lower limit to any upper limit described above. When the thermosetting resin composition has a specific gravity of less than 0.90, many pores are present in the thermosetting resin composition, and the resin is fragile and poor in the handling property, so that the fiber-reinforced composite material tends to be a molded body having many internal voids. On the other hand, when the thermosetting resin composition has a specific gravity of more than 1.30, the density of the thermosetting resin composition is too high and the thermosetting resin composition is sometimes hardly melted.

In the thermosetting resin composition according to the second aspect of the present invention, the thermosetting resin composition has a porosity of 0.1 to 25%, preferably 0.1 to 20%, and more preferably 0.1 to 16%. The porosity is calculated from the values of the specific gravity of the thermosetting resin composition and the specific gravity of a thermosetting resin composition having substantially no pore using (Formula 3) described below. The specific gravity of the thermosetting resin composition having substantially no pore is calculated by summing up the specific gravities of components contained in the thermosetting resin composition according to the volume fraction at the compounding ratio among the components.

$$
\begin{aligned}
&\texttt{Porosity (\%) = 100 - (specific gravity of} \\
&\texttt{thermosetting resin composition)/(specific gravity of} \\
&\texttt{thermosetting resin composition having no pore) × 100} \\
&\texttt{(Formula 3)}
\end{aligned}
$$

When the thermosetting resin composition has a porosity of 0.1 to 25%, it has a sufficient handling property at normal temperature and good impregnating ability into a reinforcing fiber substrate.

The above-mentioned thermosetting resin composition according to the present invention can be produced by, for example, mixing powder raw materials of the components of the base resin [A], and the curing agent [B] and/or the catalyst [C] sufficiently, and then pressing the mixture to pressure-bond the components. The pressure in the pressing is preferably 5 to 100 MPa, and more preferably 10 to 50 MPa. The pressure range may be from any lower limit to any upper limit described above. When the pressure is in the range of 5 to 100 MPa, the components are easily subjected to sufficient pressure-bonding, and the resin composition easily has a better handling property.

The form of the thermosetting resin composition according to the present invention is not particularly limited. Thermosetting resin compositions having various forms such as clump, bar, plate, film, fiber, or granule forms can be used. In particular, from the viewpoint of the impregnating ability into a reinforcing fiber and the handling property, the clump, plate, and granule forms are preferable.

The thermosetting resin composition according to the present invention preferably has a longest diameter of 1.5 mm or more, more preferably 3 mm or more, and still more preferably 10 mm or more. With a longest diameter of less than 1.5 mm, the resin composition easily contains air when heated and melted, and impregnated into a fiber-reinforced substrate. As a result, the void amount in the molded body increases when the resin is cured, and the strength property is easily deteriorated. The word "longest diameter" means the length of the longest part in the thermosetting resin composition. The upper limit of the longest diameter is not particularly limited, but generally about 1 m (1000 mm) .

The thermosetting resin composition according to the present invention preferably has a total content of the crystalline component of 70% by mass or more and 100% by mass or less, more preferably 80% by mass or more and 100% by mass or less, and still more preferably 90% by mass or more and 100% by mass or less based on 100% by mass of the thermosetting resin composition. When the thermosetting resin composition contains a plurality of different crystalline components, the word "total content of the crystalline component" means the total amount of the crystalline components. When the thermosetting resin composition has a total content of the crystalline component of 70% by mass or more, the thermosetting resin composition easily has both handling property at room temperature and impregnating ability into a reinforcing fiber when heated to a high temperature.

The word "crystalline component" means a component that has a melting point equal to or higher than normal temperature, and is solid at normal temperature. The melting point can be determined by differential scanning calorimetry (DSC) in accordance with JIS K 7121:2012 as described below.

Examples of the component that is solid at normal temperature include glassy solid components, however, the viscosity of the glassy solid components that are heated to a high temperature is hardly lowered, so that the glassy solid components have a poor impregnating ability into a reinforcing fiber when heated to a high temperature. The word "glassy solid component" means a component that does not have a melting point equal to or higher than normal temperature, but has a glass transition temperature. The glass transition temperature is determined by differential scanning calorimetry (DSC) in accordance with JIS K 7121:1987. A sample to be subjected to the measurement of the glass transition temperature is put in an aluminum crucible, and the measurement is performed in a nitrogen atmosphere at a temperature rising rate of 40°C/min. The temperature at the intermediate point of the displacement in the region where the baseline of the obtained DSC curve shifts to the endothermic side is employed as the glass transition temperature.

Moreover, it is preferable that the thermosetting resin composition according to the present invention contain a plurality of crystalline components at a content of 10% by mass or more based on 100% by mass of the thermosetting resin composition. The difference between the melting points of the crystalline component having the highest melting point and the crystalline component having the lowest melting point among the crystalline components is preferably 60°C or lower, more preferably 50°C or lower, and still more preferably 40°C or lower. When the difference between the melting points of the crystalline components is 60°C or lower, the components easily start to melt at the same time when the composition is heated and pressed, and the obtained cured product easily has a uniform composition.

The thermosetting resin composition according to the present invention may contain other components as long as the effect of the present invention is not impaired.

In the present invention, the dry reinforcing fiber used may be various organic and inorganic fibers such as glass fibers, aramid fibers, carbon fibers, and boron fibers. Among these fibers, carbon fibers are suitably used because a fiber-reinforced composite material having a light weight, and at the same time, high strength and excellent mechanical properties such as high elastic modulus can be obtained.

In the present invention, the word "dry reinforcing fiber" means a reinforcing fiber that is not impregnated with a matrix resin. Therefore, the preform for a fiber-reinforced composite material according to the present invention differs from a prepreg in which a reinforcing fiber is impregnated with a matrix resin. The dry reinforcing fiber according to the present invention, however, may be impregnated with a small amount of binder. The word "binder" means a component that binds layers of stacked reinforcing fiber substrates together. In the fiber-reinforced composite material according to the present invention described below, the reinforcing fiber is impregnated with a resin composition, so that the reinforcing fiber is not referred to as a dry reinforcing fiber.

The reinforcing fiber may be either of a staple fiber and a continuous fiber, or both the fibers can be used in combination. In order to obtain a fiber-reinforced composite material having a high fiber volume content (high Vf), a continuous fiber is preferably used.

In the present invention, the dry reinforcing fiber is sometimes used in a strand form, however, a dry reinforcing fiber substrate obtained by processing a reinforcing fiber into a form of mat, woven fabric, knit, braid, or unidirectional sheet is suitably used. Among these forms, woven fabrics are suitably used because a fiber-reinforced composite material having a high Vf is easily obtained and woven fabrics have a good handling property.

The fiber-reinforced composite material preferably has a fiber volume content Vf of 30 to 85%, and more preferably 35 to 70% with respect to the reinforcing fiber in order to have a high specific strength, or a high specific modulus. The fiber-reinforced composite material may have a fiber volume content Vf in the range from any lower limit to any upper limit described above. The word "fiber volume content Vf of a fiber-reinforced composite material" means a value defined and measured in accordance with ASTM D3171 (1999) as follows. That is, the word means a value measured after the thermosetting resin composition is impregnated into the reinforcing fiber and cured. Therefore, the fiber volume content Vf of a fiber-reinforced composite material can be represented by (Formula 4) described below using a thickness h of the fiber-reinforced composite material.

$$\cdot \texttt{Fiber volume content Vf (\%) = (Af × N)/(ρf × h)/10}$$

$$\texttt{(Formula 4)}$$

•Af: mass per one fiber substrate·1 m$^2$ (g/m$^2$)
•N: number of stacked fiber substrates
•ρf: density of reinforcing fiber (g/cm$^3$)
•h: thickness of fiber-reinforced composite material (sample piece) (mm)

When the mass Af per one reinforcing fiber substrate·1 m$^2$, the number N of stacked fiber substrates, and the density pf of the reinforcing fiber are not known, the fiber volume content of the fiber-reinforced composite material can be measured in accordance with JIS K 7075 (1991) by a combustion method, nitric acid decomposition method, or sulfuric acid decomposition method. Among these methods, the sulfuric acid decomposition method can be preferentially selected. As the density of the reinforcing fiber in this case, a value measured in accordance with JIS R 7603 (1999) is used.

A specific measurement method of the thickness h of the fiber-reinforced composite material should be a method that allows proper measurement of the thickness of the fiber-reinforced composite material, and is as accurate as, or more accurate than the micrometer specified in JIS B 7502 (1994) as described in JIS K 7072 (1991). When the fiber-reinforced composite material has too complex a shape to be measured, a sample (a sample having a shape and a size that are enough for the measurement) can be cut out from the fiber-reinforced composite material and measured.

The preform for a fiber-reinforced composite material according to the present invention contains the thermosetting resin composition according to the present invention and a dry reinforcing fiber substrate. The preform for a fiber-reinforced composite material has a form in which the thermosetting resin composition is in contact with the surface of the dry reinforcing fiber substrate directly or indirectly. For example, the preform may have a form in which the thermosetting resin composition is placed on the dry reinforcing fiber substrate, in which the dry reinforcing fiber substrate is placed on the thermosetting resin composition, or in which either of these forms are stacked. In addition, the preform may have a form in which the thermosetting resin composition and the dry reinforcing fiber substrate are in indirect contact with each other with a film or a nonwoven fabric interposed between the thermosetting resin composition and the dry reinforcing fiber substrate.

The fiber-reinforced composite material according to the present invention is a molded body containing a reinforcing fiber substrate and the thermosetting resin composition according to the present invention impregnated into the reinforcing fiber substrate, wherein the thermosetting resin composition is present as a cured product in the molded body. For example, the fiber-reinforced composite material according to the present invention is produced by impregnating the thermosetting resin composition according to the present invention into the dry reinforcing fiber substrate, molding the resulting product, and curing the composition.

The method for producing a fiber-reinforced composite material according to the present invention includes a molding step of melting the thermosetting resin composition according to the present invention, and molding the thermosetting resin composition while impregnating the thermosetting resin composition into a dry reinforcing fiber substrate, and a curing step of curing the thermosetting resin composition that is impregnated into the dry reinforcing fiber substrate and molded.

In the method for producing a fiber-reinforced composite material according to the present invention, various molding methods such as press molding methods, film bag molding methods, and autoclave molding methods can be used. Among these molding methods, the press molding methods are in particular suitably used from the viewpoint of the productivity and the shape flexibility of the molded body.

In the film bag molding methods, a preform including a thermosetting resin composition and a reinforcing fiber is placed between a rigid open mold and a flexible film, and the inside is sucked under vacuum. After that, the preform can be heated and molded while pressed with the atmospheric pressure, or with a gas or a liquid.

The method for producing a fiber-reinforced composite material according to the present invention will be described with reference to an example of the press molding methods. The fiber-reinforced composite material according to the present invention can be produced by, for example, placing the preform for a fiber-reinforced composite material containing the thermosetting resin composition according to the present invention and a dry reinforcing fiber in a mold that is heated to a predetermined temperature, and then pressing and heating the preform with a press. As a result, the resin composition is melted, impregnated into the reinforcing fiber substrate, and then cured as it is, and the fiber-reinforced composite material is produced.

From the viewpoint of the impregnating ability into a reinforcing fiber substrate, the temperature of the mold in the press molding is preferably equal to or higher than the temperature at which the complex viscosity $\eta^*$ of the used resin composition is lowered to $1 \times 10^1$ Pa·s.

EXAMPLES

Hereinafter, the present invention is described in more detail by way of examples.

<Resin Raw Materials>

The following resin raw materials were used to obtain the thermosetting resin composition in each example. The unit of the content ratio in the resin compositions shown in Tables 1 to 3 is "part by mass" unless otherwise specified.

1. Base Resin

- "jER" (registered trademark) YX4000 (manufactured by Mitsubishi Chemical Corporation): crystalline biphenyl epoxy resin, melting point = 105°C
- "jER" (registered trademark) 1004AF (manufactured by Mitsubishi Chemical Corporation): glassy solid bisphenol A epoxy resin, no melting point

2. Curing Agent

- "RIKACID" (registered trademark) TH (manufactured by New Japan Chemical Co., Ltd.): 1,2,3,6-tetrahydrophthalic anhydride, melting point = 101°C
- Phthalic anhydride (manufactured by KANTO CHEMICAL CO., INC.): melting point = 131°C
- TS-G (manufactured by SHIKOKU CHEMICALS CORPORATION): glycoluril skeleton thiol compound, melting point = 78°C

3. Catalyst

- TPP (manufactured by K.I Chemical Industry Co., Ltd.): triphenylphosphine, melting point = 80°C
- 2-Methylimidazole (manufactured by KANTO CHEMICAL CO., INC.): melting point = 142°C

<Preparation of Thermosetting Resin Composition>

Each of the resin raw materials shown in Tables 1 to 3 was pulverized with a hammer mill, and then shifted using a screen having a pore size of 1 mm to obtain a powder raw material. Moreover, each of the resin raw materials was pulverized with a jet mill to obtain a powder raw material having a smaller particle size of 10 $\mu$m or less. After that, the obtained powder raw materials were sufficiently mixed at the compounding ratio shown in Tables 1 to 3, the mixture was put in a mold having a cavity longest diameter of 1.5 mm, 10 mm, or 100 mm up to 70% of the cavity volume, and pressed at the pressure shown in each of the examples and comparative examples to obtain a thermosetting resin composition.

<Melting Point Measurement of Crystalline Component>

The melting point of the used resin raw materials were measured by differential scanning calorimetry (DSC) in accordance with JIS K 7121:2012. As a measuring device, Pyris1 DSC (manufactured by PerkinElmer Inc.) was used. The crystalline component was put in an aluminum crucible, and the measurement was performed in a nitrogen atmosphere at a temperature rising rate of 10°C/min. A DSC curve was obtained, and the temperature at the endothermic peak due to the melting of the component was measured to obtain the melting point.

<Longest Diameter Measurement of Thermosetting Resin Composition>

The longest diameter of the thermosetting resin composition prepared as described above was measured with a caliper. The average of the five measured values was determined as the longest diameter of the sample.

<Specific Gravity Measurement of Thermosetting Resin Composition>

The weight of the thermosetting resin composition prepared as described above was measured in the air and water at normal temperature, and the specific gravity was calculated by the Archimedes method. The amount of the measured sample was determined regardless of the size of the sample so that the sample had a weight of about 3 g in the air. The average of the five measured values was determined as the specific gravity of the sample.

<Porosity of Thermosetting Resin Composition>

The specific gravity of each component contained in the thermosetting resin composition prepared as described above was calculated by the Archimedes method. The resulting specific gravities of the components were summed up according to the volume fraction at the compounding ratio of components contained in the thermosetting resin composition, so that the specific gravity of the thermosetting resin composition having substantially no pore was calculated. The porosity of the thermosetting resin composition was calculated from the obtained specific gravity using the above-mentioned (Formula 3).

<Domain Diameter Measurement of Thermosetting Resin Composition>

The thermosetting resin composition prepared as described above was used as a sample, and the two-dimensional chemical composition mapping was obtained from the infrared absorption peak intensity specific to each component by the infrared spectroscopy (attenuated total reflection method) of the sample surface. In the obtained two-dimensional chemical composition mapping, the range in which the infrared absorption peak intensity of each component was continuously 1/3 or more of the maximum value was regarded as the domain of the component, and the width of the domain was measured on an arbitrary line drawn in the map along the X-axis. The domain widths were measured at 100 positions, and the average of the domain widths was employed as the domain diameter.

<Viscosity Measurement of Thermosetting Resin Composition>

The thermosetting resin composition prepared as described above was used as a sample, and the viscosity was measured by dynamic viscoelasticity measurement. As a measuring device, ARES-G2 (manufactured by TA Instruments) was used. The sample was set on a 8 mm parallel plate, a pulling cycle of 0.5 Hz was applied to the sample, and the complex viscosity $\eta^*$ at 25°C was measured.

<Measurement of Curing Time x at 150°C of Thermosetting Resin Composition>

In order to confirm the high-speed curability of the thermosetting resin composition prepared as described above, the curing time when the thermosetting resin composition was heated at 150°C was determined by dielectric measurement. As the dielectric measuring device, MDE-10 Cure Monitor (manufactured by Holometrix Micromet) was used. A Viton O-ring having an inner diameter of 32 mm and a thickness of 3 mm was installed on the lower surface of a programmable mini-press MP2000 having a TMS-1 inch sensor embedded in the lower surface thereof, the temperature of the press was set at 150°C, the resin composition was set inside of the O-ring, the press was closed, and the temporal change of the ion viscosity of the resin composition was tracked. The dielectric measurement was performed at frequencies of 1 Hz, 10 Hz, 100 Hz, 1000 Hz, and 10000 Hz, and the logarithm Log $(\alpha)$ of the frequency-independent ion viscosity was obtained using the attached software.

After that, the cure index was determined by (Formula 5), and the time when the cure index reached 90% was calculated to obtain the curing time x (min) at 150°C.

$$\text{Cure index} = \{\log (\alpha t) - \log (\alpha min)\}/\{\log (\alpha max) - \log (\alpha min)\} \times 100 \text{ (Formula 5)}$$

Cure index: (unit: %)
$\alpha t$: ion viscosity at time t (unit: $\Omega \cdot$cm)
$\alpha min$: minimum value of ion viscosity (unit: $\Omega \cdot$cm)
$\alpha max$: maximum value of ion viscosity (unit: $\Omega \cdot$cm)

<Measurement of Reaction Progress Rate y after One Week Storage at 40°C of Thermosetting Resin Composition>

In order to confirm the storage stability of the thermosetting resin composition prepared as described above, the curing reaction progress rate after one week storage under an environment at 40°C was measured. For the measurement, differential scanning calorimetry (DSC) was used. The calorific value ($E_1$) due to the curing reaction of the resin composition immediately after the preparation and the calorific value ($E_2$) due to the curing reaction of the resin composition after one week storage in a hot air oven set at 40°C were measured. The reaction progress rate y (%) after one week storage at 40°C was calculated by (Formula 6) described below:

$$\text{Reaction progress rate y} = (E_1 - E_2)/E_1 \times 100 \text{ (Formula 6)}$$

<Handling Property at Room Temperature of Thermosetting Resin Composition>

The handling property at room temperature of the thermosetting resin composition prepared as described above was comparatively evaluated on the following three scales. The thermosetting resin composition was lifted with a hand and evaluated as: "A" when caused no breaking or deformation, "B" when caused a partial crack or slight deformation, and "C" when easily caused breaking or deformation.

<Production of Fiber-Reinforced Composite Material>

A fiber-reinforced composite material was produced by the following press molding method. In a mold that had a plate-shaped cavity having a size of 350 mm × 700 mm × 2 mm and was maintained at a predetermined temperature (molding temperature), about 290 g of the thermosetting resin composition prepared as described above was set on a substrate including 9 stacked sheets of carbon fiber fabric CO6343 (carbon fiber: T300-3K, weave: plain weave, fabric weight: 198 g/m$^2$, manufactured by Toray Industries, Inc.) as a reinforcing fiber. After that, mold clamping was performed with a press device. At that time, the inside pressure of the mold was reduced to the atmospheric pressure - 0.1 MPa with a vacuum pump, and then, pressing was performed at a maximum pressure of 4 MPa. The mold temperature was set at a temperature 10°C higher than the melting point of the component that had the highest melting point among the melting points of crystalline components contained in the used thermosetting resin composition. The mold was opened and the product inside was released 30 minutes after the start of the pressing to obtain a fiber-reinforced composite material.

<Impregnating Ability into Reinforcing Fiber>

The impregnating ability of the resin into the reinforcing fiber in the production of the fiber-reinforced composite material was comparatively evaluated on the following three scales based on the void amount in the fiber-reinforced composite material.

The impregnating ability was evaluated as: "A" when the void amount in the fiber-reinforced composite material was less than 1% and substantially no void existed, "B" when the void amount in the fiber-reinforced composite material was 1% or more and less than 3% and the fiber-reinforced composite material appeared to have no part unimpregnated with the resin, although the fiber-reinforced composite material appeared to have no part unimpregnated with the resin, and "C" when the void amount in the fiber-reinforced composite material was 3% or more and the fiber-reinforced composite material appeared to have a part unimpregnated with the resin.

To obtain the void amount in the fiber-reinforced composite material, a cross section arbitrarily selected in a smoothly polished fiber-reinforced composite material was smoothly polished, the polished surface was observed with a reflected light optical microscope, and the void amount was calculated from the void area rate in the fiber-reinforced composite material.

<Composition Unevenness of Fiber-Reinforced Composite Material>

The composition unevenness of the fiber-reinforced composite material obtained as described above was comparatively evaluated on the following three scales.

The glass transition temperature (Tg) of the fiber-reinforced composite material was measured by differential scanning calorimetry (DSC) in accordance with JIS K 7121:2012 using 17 or more of samples that were uniformly cut out from the obtained fiber-reinforced composite material, and the composition unevenness was evaluated as: "A" when the difference between the maximum value and the minimum value in the result was less than 15°C, "B" when the difference was 15°C or more and less than 30°C, and "C" when the difference was 30°C or more.

(Example 1)

As shown in Table 1, the powder raw materials of 100 parts by mass of crystalline biphenyl epoxy resin "'jER' (registered trademark) YX4000", 83 parts by mass of 1,2,3,6-tetrahydrophthalic anhydride "'RIKACID' (registered trademark) TH", and 5 parts by mass of triphenylphosphine "TPP" were sufficiently mixed, and an adequate amount of the mixture was put in a circular mold having a diameter of 100 mm, and then pressed at a pressure of 5 MPa to prepare a plate-shaped thermosetting resin composition. The thermosetting resin composition had a complex viscosity $\eta^*$ of 2.3 × 10$^8$ Pa·s at 25°C and a sufficient handling property although the thermosetting resin composition caused a partial crack when lifted with a hand. Moreover, the thermosetting resin composition contained a component having a domain diameter of 87 μm. The thermosetting resin composition was good in a balance between high-speed curability and storage stability.

A fiber-reinforced composite material that was produced using 5 plates of the resin composition (290 g in total) produced as described above and a dry reinforcing fiber substrate had some internal voids but no unimpregnated part on the surface. Therefore, the thermosetting resin composition showed a sufficient impregnating ability. From the fiber-reinforced composite material, 17 samples were uniformly cut out, and Tg was measured. The result showed that a uniform fiber-reinforced composite material having almost no unevenness depending on the position was obtained.

(Examples 2 to 4)

Examples 2 to 4 were performed in the same manner as in Example 1 except that the mixture was pressed at a pressure of 10 MPa, 30 MPa, or 50 MPa, respectively, in the preparation of the thermosetting resin composition. All the thermosetting resin compositions had a complex viscosity $\eta^*$ of $2.3 \times 10^8$ Pa·s at 25°C and a good handling property so that the thermosetting resin compositions caused no crack when lifted with a hand. Moreover, the thermosetting resin compositions were good in a balance between high-speed curability and storage stability. A fiber-reinforced composite material that was produced using each of the thermosetting resin compositions and a dry reinforcing fiber substrate was a uniform fiber-reinforced composite material having almost no internal void and almost no unevenness. The result that the above-mentioned fiber-reinforced composite materials were obtained showed that the thermosetting resin compositions had a good impregnating ability.

(Example 5)

Example 5 was performed in the same manner as in Example 3 except that a mold having a diameter of 1.5 mm was used and the thermosetting resin composition was granular. The thermosetting resin composition had a complex viscosity $\eta^*$ of $2.3 \times 10^8$ Pa·s at 25°C and a good handling property so that the thermosetting resin composition caused no crack when lifted with a hand. Moreover, the thermosetting resin compositions were good in a balance between high-speed curability and storage stability. A fiber-reinforced composite material that was produced using 290 g of the thermosetting resin composition and a dry reinforcing fiber substrate had some internal voids, however, was a uniform fiber-reinforced composite material having no unimpregnated part on the surface and almost no unevenness. The result that the above-mentioned fiber-reinforced composite material was obtained showed that the thermosetting resin composition had a sufficient impregnating ability.

(Example 6)

Example 6 was performed in the same manner as in Example 3 except that a mold having a diameter of 10 mm was used and the thermosetting resin composition was clumpy. The thermosetting resin composition had a complex viscosity $\eta^*$ of $2.3 \times 10^8$ Pa·s at 25°C and a good handling property so that the thermosetting resin composition caused no crack when lifted with a hand. Moreover, the thermosetting resin compositions were good in a balance between high-speed curability and storage stability. A fiber-reinforced composite material that was produced using 290 g of the thermosetting resin composition and a dry reinforcing fiber substrate was a uniform fiber-reinforced composite material having almost no internal void, a good impregnating ability, and almost no unevenness. The result that the above-mentioned fiber-reinforced composite material was obtained showed that the thermosetting resin composition had a sufficient impregnating ability.

(Example 7)

Example 7 was performed in the same manner as in Example 2 except that 0.5 parts by mass of 2-methylimidazole was used as a catalyst as shown in Table 2. The thermosetting resin composition had a complex viscosity $\eta^*$ of $2.2 \times 10^8$ Pa·s at 25°C and a good handling property so that the thermosetting resin composition caused no crack when lifted with a hand. Moreover, the thermosetting resin composition had a high-speed curability a little lowered, however, was sufficient in a balance between high-speed curability and storage stability. A fiber-reinforced composite material that was produced using each of the thermosetting resin compositions and a dry reinforcing fiber substrate was a uniform fiber-reinforced composite material having almost no internal void and almost no unevenness. The result that the above-mentioned fiber-reinforced composite materials were obtained showed that the thermosetting resin compositions had a good impregnating ability.

(Examples 8 and 9)

Examples 8 and 9 were performed in the same manner as in Example 7 except that 1 part by mass of 2-methylimidazole and 15 parts by mass of 2-methylimidazole were blended as a catalyst, respectively. The thermosetting resin compositions had a complex viscosity $\eta^*$ of $2.2 \times 10^8$ Pa·s at 25°C and a good handling property so that the thermosetting resin compositions caused no crack when lifted with a hand. Moreover, the thermosetting resin compositions were sufficient in a balance between high-speed curability and storage stability. A fiber-reinforced composite material that was produced using each of the thermosetting resin compositions and a dry reinforcing fiber substrate was a uniform fiber-reinforced composite material having almost no internal void and almost no unevenness. The result that the above-mentioned fiber-reinforced composite materials were obtained showed that the thermosetting resin compositions had a good impregnating ability.

(Example 10)

Example 10 was performed in the same manner as in Example 7 except that 30 parts by mass of 2-methylimidazole was blended as a catalyst. The thermosetting resin composition had a complex viscosity $\eta^*$ of $2.2 \times 10^8$ Pa·s at 25°C and a good handling property so that the thermosetting resin composition caused no crack when lifted with a hand. Moreover, the thermosetting resin compositions were sufficient in a balance between high-speed curability and storage stability. A fiber-reinforced composite material that was produced using the thermosetting resin composition and a dry reinforcing fiber substrate had some internal voids, however, was a uniform fiber-reinforced composite material having almost no unevenness. The result that the above-mentioned fiber-reinforced composite material was obtained showed that the thermosetting resin composition had a sufficient impregnating ability.

(Example 11)

Example 11 was performed in the same manner as in Example 3 except that as shown in Table 2, the powder raw materials of 50 parts by mass of crystalline biphenyl epoxy resin "'jER'(registered trademark) YX4000", 50 parts by mass of glassy solid bisphenol A epoxy resin "jER' (registered trademark) 1004AF", 49 parts by mass of 1,2,3,6-tetrahydrophthalic anhydride "'RIKACID' (registered trademark) TH), and 5 parts by mass of triphenylphosphine "TPP" were sufficiently mixed. The thermosetting resin composition had a complex viscosity $\eta^*$ of $1.7 \times 10^8$ Pa·s at 25°C and a sufficient handling property so that the thermosetting resin composition caused no crack when lifted with a hand. Moreover, the thermosetting resin compositions were good in a balance between high-speed curability and storage stability. A fiber-reinforced composite material that was produced using the thermosetting resin composition and a dry reinforcing fiber substrate had some internal voids but no unimpregnated part on the surface. The result that the above-mentioned fiber-reinforced composite material was obtained showed that the thermosetting resin composition had a sufficient impregnating ability.

(Example 12)

Example 12 was performed in the same manner as in Example 2 except that 80 parts by mass of phthalic anhydride was used as a curing agent. The thermosetting resin composition had a complex viscosity $\eta^*$ of $1.5 \times 10^8$ Pa·s at 25°C and a good handling property so that the thermosetting resin composition caused no crack when lifted with a hand. Moreover, the thermosetting resin compositions were sufficient in a balance between high-speed curability and storage stability. A fiber-reinforced composite material that was produced using the thermosetting resin composition and a dry reinforcing fiber substrate was a uniform fiber-reinforced composite material having almost no unevenness. The result that the above-mentioned fiber-reinforced composite materials were obtained showed that the thermosetting resin compositions had a good impregnating ability.

(Example 13)

Example 13 was performed in the same manner as in Example 3 except that 51 parts by mass of a glycoluril skeleton thiol compound was used as a curing agent and no catalyst was used. The thermosetting resin composition had a complex viscosity $\eta^*$ of $1.0 \times 10^8$ Pa·s at 25°C and a good handling property so that the thermosetting resin composition caused no crack when lifted with a hand. Moreover, the thermosetting resin compositions were sufficient in a balance between high-speed curability and storage stability. A fiber-reinforced composite material that was produced using the thermosetting resin composition and a dry reinforcing fiber substrate had some internal voids, however, was sufficiently uniform.

(Examples 14 to 17)

Examples 14 to 17 were performed in the same manner as in Example 3 except that the size of each powder raw material was changed so that the domain diameter was 1 μm, 15 μm, 284 μm, or 492 μm as shown in Table 3. All the thermosetting resin compositions had a complex viscosity $\eta^*$ of $2.3 \times 10^8$ Pa·s at 25°C and a good handling property so that the thermosetting resin compositions caused no crack when lifted with a hand. Moreover, the thermosetting resin compositions were good in a balance between high-speed curability and storage stability. A fiber-reinforced composite material that was produced using each of the thermosetting resin compositions and a dry reinforcing fiber substrate was a uniform fiber-reinforced composite material having almost no internal void and almost no unevenness. The result that the above-mentioned fiber-reinforced composite materials were obtained showed that the thermosetting resin compositions had a good impregnating ability.

(Comparative Example 1)

Comparative Example 1 was performed in the same manner as in Example 1 except that the mixture was pressed under a pressure of 1 MPa in the preparation of the thermosetting resin composition. The thermosetting resin composition had a complex viscosity $\eta^*$ of $2.3 \times 10^8$ Pa·s at 25°C, however, was deficient in a handling property so that the thermosetting resin composition easily caused a crack when lifted with a hand. A fiber-reinforced composite material that was produced using the thermosetting resin composition and a dry reinforcing fiber substrate had many internal voids.

(Comparative Example 2)

Comparative Example 2 was performed in the same manner as in Example 1 except that the mixture of components was heated to a temperature equal to or higher than the melting point of each component, and melted and stirred so that the components were compatibilized, and an adequate amount of the resulting product was put in a mold having a longest diameter of 100 mm, and cooled to prepare a thermosetting resin composition. The thermosetting resin composition had a complex viscosity $\eta^*$ of $2.5 \times 10^8$ Pa·s at 25°C and a good handling property, however, was deficient in a storage stability because the components were compatibilized with each other.

[Table 1]

| | | | Example 1 | Example 2 | Example 3 | Example 4 | Example 5 | Example 6 |
|---|---|---|---|---|---|---|---|---|
| Base resin | Crystalline biphenyl epoxy resin | YX4000 | 100 | 100 | 100 | 100 | 100 | 100 |
| | Glassy solid bisphenol A epoxy resin | JER1004AF | | | | | | |
| Curing agent | 1,2,3,6-Tetrahydrophthalic anhydride | TH | 83 | 83 | 83 | 83 | 83 | 83 |
| | Phthalic anhydride | | | | | | | |
| | Glycoluril skeleton thiol compound | TS-G | | | | | | |
| Catalyst | Triphenylphosphine | TPP | 5 | 5 | 5 | 5 | 5 | 5 |
| | 2-Methylimidazole | | | | | | | |
| Resin properties | Longest diameter [mm] | | 100 | 100 | 100 | 100 | 1.5 | 10 |
| | Specific gravity [g/cm$^3$] | | 0.93 | 0.97 | 1.02 | 1.10 | 1.02 | 1.02 |
| | Porosity [%] | | 23 | 20 | 16 | 9 | 16 | 16 |
| | Domain diameter [μm] | | 87 | 85 | 85 | 80 | 85 | 85 |
| | Curing time (x) at 150°C [min] | | 2.9 | 2.9 | 2.9 | 2.9 | 2.9 | 2.9 |
| | Reaction progress rate (y) after one week storage at 40°C [%] | | 1.6 | 1.8 | 2.4 | 2.8 | 1.6 | 1.6 |
| | x × y | | 4.6 | 5.2 | 7.0 | 8.1 | 4.6 | 4.6 |
| | Handling property | | B | A | A | A | A | A |
| Properties of composite material | Impregnating ability | | B | A | A | A | B | A |
| | Composition unevenness | | A | A | A | A | A | A |

[Table 2]

| | | | Example 7 | Example 8 | Example 9 | Example 10 | Example 11 | Example 12 | Example 13 |
|---|---|---|---|---|---|---|---|---|---|
| Base resin | Crystalline biphenyl epoxy resin | YX4000 | 100 | 100 | 100 | 100 | 50 | 100 | 100 |
| | Glassy solid bisphenol A epoxy resin | JER1004AF | | | | | 50 | | |
| Curing agent | 1,2,3,6-Tetrahydrophthalic anhydride | TH | 83 | 83 | 83 | 83 | 49 | | |
| | Phthalic anhydride | | | | | | | 80 | |
| | Glycoluril skeleton thiol compound | TS-G | | | | | | | 51 |
| Catalyst | Triphenylphosphine | TPP | | | | | 5 | 5 | |
| | 2-Methylimidazole | | 0.5 | 1 | 15 | 30 | | | |
| Resin properties | Longest diameter [mm] | | 100 | 100 | 100 | 100 | 100 | 100 | 100 |
| | Specific gravity [g/cm$^3$] | | 1.03 | 1.03 | 1.03 | 1. 03 | 1.02 | 1.03 | 1.02 |
| | Porosity [%] | | 15 | 15 | 15 | 15 | 16 | 15 | 16 |
| | Domain diameter [$\mu$m] | | 85 | 85 | 88 | 90 | 90 | 88 | 80 |
| | Curing time (x) at 150°C [min] | | 5.9 | 4.1 | 2.3 | 1.5 | 4.5 | 3 | 0.4 |
| | Reaction progress rate (y) after one week storage at 40°C [%] | | 2.8 | 3.2 | 5.4 | 7.9 | 1.8 | 1.8 | 30 |
| | x × y | | 16.5 | 13.1 | 12.4 | 11.9 | 8.1 | 5.4 | 12.0 |
| | Handling property | | A | A | A | A | A | A | A |
| Properties of composite material | Impregnating ability | | A | A | A | A | B | A | B |
| | Composition unevenness | | B | A | A | B | A | A | B |

[Table 3]

|  |  |  | Example 14 | Example 15 | Example 16 | Example 17 | Comparative Example 1 | Comparative Example 2 |
|---|---|---|---|---|---|---|---|---|
| Base resin | Crystalline biphenyl epoxy resin | YX4000 | 100 | 100 | 100 | 100 | 100 | 100 |
|  | Glassy solid bisphenol A epoxy resin | JER1004AF |  |  |  |  |  |  |
| Curing agent | 1,2,3,6-Tetrahydrophthalic anhydride | TH | 83 | 83 | 83 | 83 | 83 | 83 |
|  | Phthalic anhydride |  |  |  |  |  |  |  |
|  | Glycoluril skeleton thiol compound | TS-G |  |  |  |  |  |  |
| Catalyst | Triphenylphosphine | TPP | 5 | 5 | 5 | 5 | 5 | 5 |
|  | 2-Methylimidazole |  |  |  |  |  |  |  |
| Resin properties | Longest diameter [mm] |  | 100 | 100 | 100 | 100 | 100 | 100 |
|  | Specific gravity [g/cm$^3$] |  | 1.03 | 1.02 | 1.02 | 1.01 | 0.84 | 1.02 |
|  | Porosity [%] |  | 15 | 16 | 16 | 17 | 31 | 16 |
|  | Domain diameter [$\mu$m] |  | 1 | 15 | 284 | 492 | 87 | - |
|  | Curing time (x) at 150°C [min] |  | 2.7 | 2.8 | 3.2 | 3.3 | 2.9 | 2.9 |
|  | Reaction progress rate (y) after one week storage at 40°C [%] |  | 2.3 | 2.1 | 1.3 | 0.6 | 1.5 | 53 |
|  | x × y |  | 6.2 | 5.9 | 4.2 | 2.0 | 4.4 | 153.7 |
|  | Handling property |  | A | A | A | A | C | B |
| Properties of composite material | Impregnating ability |  | A | A | A | A | C | A |
|  | Composition unevenness |  | A | A | A | A | A | A |

INDUSTRIAL APPLICABILITY

The thermosetting resin composition according to the present invention is good in a balance between high-speed curability and storage stability, and the impregnating ability into a reinforcing fiber substrate. Therefore, an adjusted resin can be stored for a long time, and a fiber-reinforced composite material can be provided more conveniently by a press molding method and the like with high productivity. As a result, the fiber-reinforced composite material is increasingly employed especially for cars and aircraft, and it can be expected that the more weight saving of cars and aircraft leads to the fuel consumption improvement and contribution to reduction of global warming gas emission.

**Claims**

1. A thermosetting resin composition for a fiber-reinforced composite material, the thermosetting resin composition comprising:

   a domain of a base resin [A]; and
   a domain of a curing agent [B] and/or a domain of a catalyst [C],
   the thermosetting resin composition having a specific gravity of 0.90 to 1.30, and a complex viscosity $\eta*$ determined by dynamic viscoelasticity measurement at 25°C of $1 \times 10^7$ Pa·s or more.

2. A thermosetting resin composition for a fiber-reinforced composite material, the thermosetting resin composition comprising:

   a domain of a base resin [A]; and
   a domain of a curing agent [B] and/or a domain of a catalyst [C],
   the thermosetting resin composition having a porosity of 0.1 to 25%, and a complex viscosity $\eta*$ determined by dynamic viscoelasticity measurement at 25°C of $1 \times 10^7$ Pa·s or more.

3. The thermosetting resin composition for a fiber-reinforced composite material according to claim 1 or 2, having a longest diameter of 1.5 mm or more.

4. The thermosetting resin composition for a fiber-reinforced composite material according to any one of claims 1 to 3, wherein a product of a curing time x (min) at 150°C and a curing reaction progress rate y (%) after one week storage under an environment at 40°C satisfies (Formula 1) shown below:

$$0 \leq x \times y \leq 40 \qquad \text{(Formula 1)}$$

   wherein x satisfies $0.1 \leq x \leq 300$, and y satisfies $0 \leq y \leq 50$.

5. The thermosetting resin composition for a fiber-reinforced composite material according to any one of claims 1 to 4, comprising the catalyst [C], and having a content of the catalyst [C] of 1 to 30% by mass based on 100% by mass of the thermosetting resin composition.

6. A preform for a fiber-reinforced composite material, the preform comprising:

   the thermosetting resin composition for a fiber-reinforced composite material according to any one of claims 1 to 5; and
   a dry reinforcing fiber substrate.

7. A fiber-reinforced composite material that is a molded body comprising a reinforcing fiber substrate and the thermosetting resin composition for a fiber-reinforced composite material according to any one of claims 1 to 5 impregnated into the reinforcing fiber substrate, wherein the thermosetting resin composition is present as a cured product in the molded body.

8. A method for producing a fiber-reinforced composite material, the method comprising:

a molding step of melting the thermosetting resin composition for a fiber-reinforced composite material according to any one of claims 1 to 5, and molding the thermosetting resin composition while impregnating the thermosetting resin composition into a dry reinforcing fiber substrate; and

a curing step of curing the thermosetting resin composition that is impregnated into the dry reinforcing fiber substrate and molded.

## INTERNATIONAL SEARCH REPORT

| | International application No. |
|---|---|
| | PCT/JP2018/034754 |

| A. CLASSIFICATION OF SUBJECT MATTER |
|---|
| Int.Cl. C08J5/04(2006.01)i, C08L63/00(2006.01)i |

According to International Patent Classification (IPC) or to both national classification and IPC

| B. FIELDS SEARCHED |
|---|
| Minimum documentation searched (classification system followed by classification symbols) |
| Int.Cl. B29B11/16;15/08-15/14, C08J5/04-5/10;5/24, C08K3/00-13/08, C08L1/00-101/14, C08G59/00-59/72, B29C39/00-39/44, B29C43/00-43/58, B29C70/00-70/88 |

| Documentation searched other than minimum documentation to the extent that such documents are included in the fields searched |
|---|
| Published examined utility model applications of Japan     1922–1996 |
| Published unexamined utility model applications of Japan     1971–2018 |
| Registered utility model specifications of Japan     1996–2018 |
| Published registered utility model applications of Japan     1994–2018 |

| Electronic data base consulted during the international search (name of data base and, where practicable, search terms used) |
|---|
| |

| C. DOCUMENTS CONSIDERED TO BE RELEVANT |
|---|

| Category* | Citation of document, with indication, where appropriate, of the relevant passages | Relevant to claim No. |
|---|---|---|
| X<br>A | JP 2016-500409 A (HEXCEL COMPOSITES LIMITED) 12 January 2016, entire text, in particular, claims, paragraphs [0065]-[0068], [0080]-[0081] & US 2015/0299407 A1, claims, paragraphs [0069]-[0072], [0084]-[0085] & GB 2509616 A & WO 2014/096435 A2 & EP 2935421 A1 & CA 2888124 A & CN 104870512 A & KR 10-2015-0097693 A & MX 2015008091 A & BR 112015009576 A | 7<br>1-6, 8 |
| A | JP 2010-229211 A (TORAY INDUSTRIES, INC.) 14 October 2010, entire text (Family: none) | 1-8 |

| ☒ Further documents are listed in the continuation of Box C. | ☐ See patent family annex. |
|---|---|

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 December 2018 (04.12.2018) | 18 December 2018 (18.12.2018) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/034754 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2016/046138 A1 (HEXCELL COMPOSITES LIMITED) 31 March 2016, entire text & JP 2017-528576 A & US 2017/0226274 A1 & GB 2532570 A & EP 3197933 A1 & CN 106715579 A & KR 10-2017-0057281 A | 1-8 |
| A | WO 2016/207309 A1 (HEXCELL REINFORCEMENTS SASU) 29 December 2016, entire text & JP 2018-521205 A & US 2018/0162019 A1 & EP 3313639 A1 & CN 107708954 A & KR 10-2018-0018815 A & MX 2017016402 A | 1-8 |
| A | WO 2015/079917 A1 (TORAY INDUSTRIES, INC.) 04 June 2015, entire text & US 2016/0289406 A1 & EP 3075761 A1 & CN 105745258 A & KR 10-2016-0094935 A | 1-8 |
| A | JP 62-240375 A (NITTO ELECTRIC IND CO., LTD.) 21 October 1987, entire text (Family: none) | 1-8 |
| A | JP 2008-214547 A (TORAY INDUSTRIES, INC.) 18 September 2008, entire text (Family: none) | 1-8 |
| A | JP 2016-113470 A (HONDA MOTOR CO., LTD.) 23 June 2016, entire text & US 2016/0168371 A1 | 1-8 |
| P, A | JP 2018-131575 A (TORAY INDUSTRIES, INC.) 23 August 2018, entire text (Family: none) | 1-8 |

Form PCT/ISA/210 (continuation of second sheet) (January 2015)

**EP 3 689 947 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3029098 A
- JP 5315057 B